# EUROPÄISCHE PATENTSCHRIFT

(11) **EP 1 260 263 B1**
(45) Veröffentlichungstag und Bekanntmachung des Hinweises auf die Patenterteilung: **06.10.2004**
(21) Anmeldenummer: 02004588.6
(22) Anmeldetag: 28.02.2002
(51) Int. Cl.: B01D 46/52, B60H 3/06, F02M 35/024, F24F 13/28, F01M 13/04

(54) **Filteranordnung**
Filter assembly
Ensemble filtrant

(30) Priorität: 17.05.2001 DE 10123969
(43) Veröffentlichungstag der Anmeldung: 27.11.2002
(73) Patentinhaber: Carl Freudenberg KG, 69469 Weinheim (DE); Behr GmbH & Co., 70469 Stuttgart (DE)
(72) Erfinder: Felber, Uwe, 69518 Absteinach (DE); Boschert, Björn, 71254 Ditzingen (DE); Malig, Christoph, 69469 Weinheim (DE); Rinckleb, Tilo, 71732 Tamm (DE); Schöttmer, Dieter, 44269 Dortmund (DE)

(56) Entgegenhaltungen:
- EP-A- 0 684 152
- EP-A- 0 744 309
- GB-A- 2 348 153
- US-A- 2 655 091
- US-A- 4 925 468
- US-A- 5 030 264
- US-A- 5 435 837
- US-A- 5 494 497
- US-A- 6 089 202

## Beschreibung

Die Erfindung betrifft eine Filteranordnung, umfassend einen Faltenfilter und einen Deckel eines Filtergehäuses.

### Stand der Technik

Eine solche Filteranordnung ist bekannt. Dabei wird der Faltenfilter als Einzelteil zunächst im Filtergehäuse montiert, wobei die Montageöffnung des Filtergehäuses anschließend durch den Deckel verschlossen wird. Der Deckel und der Faltenfilter werden mittels einer separat erzeugten Dichtung gegeneinander abgedichtet.
Dabei ist allerdings zu beachten, dass die Montage einer solchen Filteranordnung wenig zufriedenstellend ist. Die räumliche Zuordnung und/oder die Abdichtung von Faltenfilter und Deckel zueinander ist im Wesentlichen von den Fähigkeiten und der Zuverlässigkeit des Monteurs abhängig, wobei fehlerhaft montierte Faltenfilter und/oder Deckel häufig zu unerwünschten Undichtigkeiten und/oder zu einem Strömungs-Kurzschluss zwischen der An- und Abströmseite des Faltenfilters führen. Der Montageaufwand am Band und bei schlechter Zugänglichkeit des Filtergehäuses ist beträchtlich.

Aus der GB 2 348 153 A ist eine Filteranordnung bekannt, umfassend einen Faltenfilter und einen Deckel eines Filtergehäuses, wobei der Faltenfilter und der Deckel eine vormontierbare Einheit bilden. Der Deckel weist einen Griff auf und dichtet die Öffnung des Filtergehäuses, in der der Faltenfilter angeordnet ist, gegenüber der Umgebung ab. Die Faltung des Filters verläuft parallel zum Deckel.

### Darstellung der Erfindung

Der Erfindung liegt die Aufgabe zugrunde, eine Filteranordnung der eingangs genannten Art derart weiterzuentwickeln, dass die Bestandteile der vormontierbaren Einheit einander verliersicher und dichtend zugeordnet sind. Die Filteranordnung soll außerdem einen einfachen und teilearmen Aufbau aufweisen und daher einfach und kostengünstig herstellbar sein. Außerdem soll die Gefahr von Montagefehlem auf ein Minimum reduziert sein. Bedarfsweise soll der Faltenfilter besonders einfach austauschbar sein.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist eine Filteranordnung vorgesehen, umfassend einen Faltenfilter und einen Deckel eines Filtergehäuses, wobei der Faltenfilter und der Deckel eine vormontierbare Einheit bilden und zerstörungsfrei lösbar sowie im Wesentlichen dichtend miteinander verbunden sind, wobei der Deckel ein Schwert aufweist, das in der dem Deckel zugewandten, letzten Falte der Stirnseite des Faltenfilters im Wesentlichen dichtend angeordnet ist. Das Schwert des Deckels hat zwei Funktionen. Zum einen bewirkt das Schwert durch seine formschlüssige Anordnung in der Falte des Falten filters eine verliersichere Zuordnung der Bestandteile der vormontierbaren Einheit. Der Faltenfilter ist in seiner Längsrichtung am Deckel fixiert. Außerdem bildet das Schwert neben der zuvor beschriebenen Verliersicherung die Dichtung zwischen Deckel und Filter. Während der bestimmungsgemäßen Verwendung der Filteranordnung berührt das Schwert den Faltenfilter im Wesentlichen dichtend, so dass es einer separat erzeugten, beispielsweise aus Schaumstoff bestehenden Dichtung nicht bedarf. Eine kostengünstige Herstellung und einfache Montage der Filteranordnung ist dadurch begünstigt. Außerdem ist hierbei von Vorteil, dass die Filteranordnung im Wesentlichen nur aus drei Teilen besteht, nämlich dem Faltenfilter, der mit dem Deckel die vormontierbare Einheit bildet und dem Filtergehäuse, in das die vormontierbare Einheit einsetzbar ist. Von hervorzuhebendem Vorteil ist dabei außerdem, dass der Faltenfilter und der Deckel, die die vormontierbare Einheit bilden, sowohl miteinander verbunden als auch gegeneinander abgedichtet sind. Durch die zerstörungsfrei lösbare Verbindung des Faltenfilters am Deckel kann der Faltenfilter bedarfsweise einfach ausgetauscht werden; der Deckel ist nahezu beliebig oft wiederverwendbar. Besonders vorteilhaft, weil einfach, ist die Filteranordnung dann, wenn der Faltenfilter unmittelbar, d.h. unter Vermeidung der Verwendung einer separat hergestellten Dichtung, dichtend mit dem Deckel verbunden ist. Durch die aus nur zwei Teilen bestehende vormontierbare Einheit sind Montagefehler und die Montagedauer deutlich reduziert.

Der Faltenfilter und der Deckel können kraft- und/oder formschlüssig miteinander verbunden sein. Eine kraftschlüssige Verbindung von Faltenfilter und Deckel kann beispielsweise dadurch erzielt werden, dass der Faltenfilter ausschließlich reibschlüssig in einer Führungsschiene des Deckels angeordnet ist. Zusätzlich oder alternativ kann der Faltenfilter formschlüssig mit dem Deckel verbunden sein. Dazu kann es vorgesehen sein, dass der Deckel und/oder der Faltenfilter beispielsweise einen Vorsprung aufweisen, der in eine Hinterschneidung des Faltenfilters und/oder des Deckels eingreift.
Im Hinblick auf den, bezogen auf den Deckel, vergleichsweise empfindlichen Faltenfilter, der aus einem Vliesstoff bestehen kann, wird einer hauptsächlich formschlüssigen Verbindung von Faltenfilter und Deckel im Rahmen der vorliegenden Erfindung der Vorzug gegeben. Die mechanischen Belastungen auf den Faltenfilter während der Montage sind dadurch weitesgehend reduziert.

Der Deckel kann aus einem polymeren Werkstoff bestehen. Gelangt die Filteranordnung beispielsweise in Kraftfahrzeugen als Fahrzeuginnenraum-Filter zur Anwendung, ist von Vorteil, dass der Deckel trotz Beaufschlagung mit Feuchtigkeit rostfrei ist. Außerdem ist der Deckel aus polymerem Werkstoff im Vergleich zu Deckeln aus einem metallischen Werkstoff leichter, was in Verbindung mit anderen Leichtbauteilen ein geringes Gesamtgewicht des Fahrzeugs begünstigt. Das Recycling von polymeren Werkstoffen ist außerdem mit einem geringen Energieeinsatz möglich.

Das Schwert kann auf der Anströmseite des Faltenfilters in der letzten stimseitigen Falte angeordnet sein. Das Schwert bildet dadurch ein Widerlager zu einem weiteren Widerlager, das auf der Abströmseite des Faltenfilters angeordnet ist.

Der Deckel und das Schwert können einstückig und materialeinheitlich ausgebildet sein. Auch durch eine derartige Ausgestaltung wird die Lösung der eingangs gestellten Aufgabe begünstigt, da die gesamte Filteranordnung einen einfachen, teilearmen Aufbau aufweist, dadurch kostengünstig herstellbar ist und Montagefehler durch den teilearmen Aufbau weitgehend ausgeschlossen sind. Außerdem gelangen nur wenige unterschiedliche Materialien zur Anwendung, so dass die Filteranordnung einfach recycelbar ist.

Das Schwert kann im Wesentlichen L-förmig ausgebildet sein. Das Einfädeln der dem Deckel zugewandten, letzten Falte der Stirnseite des Faltenfilters in das Schwert ist dadurch besonders einfach möglich.

Der Deckel kann auf der dem Faltenfilter zugewandten Seite einen Griff zur Montage oder Demontage der vormontierbaren Einheit aufweisen, wobei der Deckel und der Griff bevorzugt ebenfalls einstückig und materialeinheitlich ausgebildet sind. Das Handling der vormontierbaren Einheit ist durch den Griff verbessert. Es ist nicht erforderlich, die vormontierbare Einheit während ihrer Montage mit dem Filtergehäuse am Faltenfilter zu berühren. Eine Beschädigung des Faltenfilters und daraus resultierende, montagebedingte Funktionsbeeinträchtigungen sind weitgehend ausgeschlossen.

Der Deckel kann auf der dem Faltenfilter zugewandten Seite ein Widerlager zur Lagerung des Faltenfilters am Deckel aufweisen. Wie bereits zuvor bei der einstückigen und materialeinheitlichen Ausgestaltung des Schwerts mit dem Deckel und/oder des Griffs mit dem Deckel ausgeführt, ist auch hier der einfache und kostengünstige Aufbau, die einfache Montage durch die Vermeidung vieler, separat zu erzeugender Bauteile und die gute Recyclingfähigkeit von hervorzuhebendem Vorteil.

Das Widerlager kann durch zwei die Längsseiten des Faltenfilters abströmseitig zumindest teilweise untergreifende Längsschienen gebildet sein. Dadurch, dass beide Längsseiten des Faltenfilters abströmseitig von den Längsschienen untergriffen sind, ergibt sich eine exakte Zuordnung der Lage des Faltenfilters bezogen auf den Deckel. Die Verwendung nur einer Längsschiene würde demgegenüber eine verkantete Zuordnung des Faltenfilters zum Deckel und dadurch möglicherweise Funktionsbeeinträchtigungen begünstigen. Speziell im Hinblick auf die Abdichtung des Faltenfilters durch das Schwert ist eine exakte Zuordnung des Faltenfilters zum Deckel besonders zweckmäßig.

Das Widerlager kann durch zwei die Längsseiten des Faltenfilters zumindest teilweise U-förmig umgreifende Halteklammem gebildet sein. Die Längsschienen können einen Bestandteil der Halteklammern bilden. Die exakte Positionierung des Faltenfilters bezogen auf den Deckel ist durch eine derartige Ausgestaltung weiter verbessert, wobei die Möglichkeit besteht, die Halteklammern auf der dem Faltenfilter zugewandten Seite mit jeweils einer Oberflächenprofilierung zu versehen, die die Längsseiten des Faltenfilters anliegend berühren und dadurch zusätzlich zu der formschlüssigen Verbindung durch das Schwert, das in die letzte Falte der Stirnseite des Faltenfilters eingreift, eine kraftschlüssige Verbindung bewirken. Durch die Halteklammem wird die anströmseitige und abströmseitige Begrenzung zumindest eines Teils der Längsseiten des Faltenfilters überdeckt.

Das Widerlager kann auf zumindest einer Längsseite des Faltenfilters zumindest einen elastisch nachgiebigen Rastnocken aufweisen, der die anströmseitige Begrenzung der entsprechenden Längsseite zumindest teilweise überdeckt. Bevorzugt ist jedoch jede Längsseite des Faltenfilters anströmseitig von jeweils zumindest einem elastisch nachgiebigen Rastnocken zumindest teilweise überdeckt. Im Hinblick auf ein einfaches Handling ist von Vorteil, dass der Faltenfilter mittels der Rastnocken in das Widerlager einschnappbar ist. Die Montage des Faltenfilters mit dem Deckel erfolgt bevorzugt derart, dass der Faltenfilter mit seiner letzten anströmseitigen Falte unter das Schwert des Deckels eingefädelt und anschließend in Richtung des Widerlagers geschwenkt wird, so lange, bis die abströmseitige Längsseite des Faltenfilters auf dem Widerlager aufliegt. Wenn die Längsseiten des Faltenfilters das Widerlager anliegend berühren, rasten die zunächst elastisch aufgeweiteten Rastnocken über der anströmseitigen Begrenzung der Längsseite des Faltenfilters widerhakenförmig ein und erzeugen dadurch eine unverlierbare Verbindung des Faltenfilters am Deckel, wobei beide Teile die vormontierbare Einheit bilden. Zur Trennung des Faltenfilters vom Deckel werden die Rastnocken solange elastisch entgegen ihrer Einrast-Richtung verformt, bis sie die anströmseitige Begrenzung des Faltenfilters freigeben und dieser, entgegen der Montagerichtung solange geschwenkt wird, bis die letzte anströmseitige Falte unter dem Schwert hervorgezogen und der Faltenfilter dadurch vom Deckel zerstörungsfrei getrennt werden kann.

### Kurzbeschreibung der Zeichnung

Ein Ausführungsbeispiel der erfindungsgemäßen Filteranordnung ist in den Figuren 1 bis 4 gezeigt und wird nachfolgend näher beschrieben.

Die Figuren 1 bis 4 zeigen jeweils in schematischer Darstellung:
- Fig. 1: ein Ausführungsbeispiel der erfindungsgemäßen Filteranordnung, wobei die vormontierbare Einheit teilweise in ein Filtergehäuse eingeschoben ist,
- Fig. 2: einen vergrößerten Ausschnitt der vormontierbaren Einheit aus Fig. 1,
- Fig. 3: den Deckel als Einzelteil in perspektivischer Darstellung von schräg oben,
- Fig. 4: den Deckel aus Fig. 3 in einer perspektivischen Ansicht von schräg unten.

### Ausführung der Erfindung

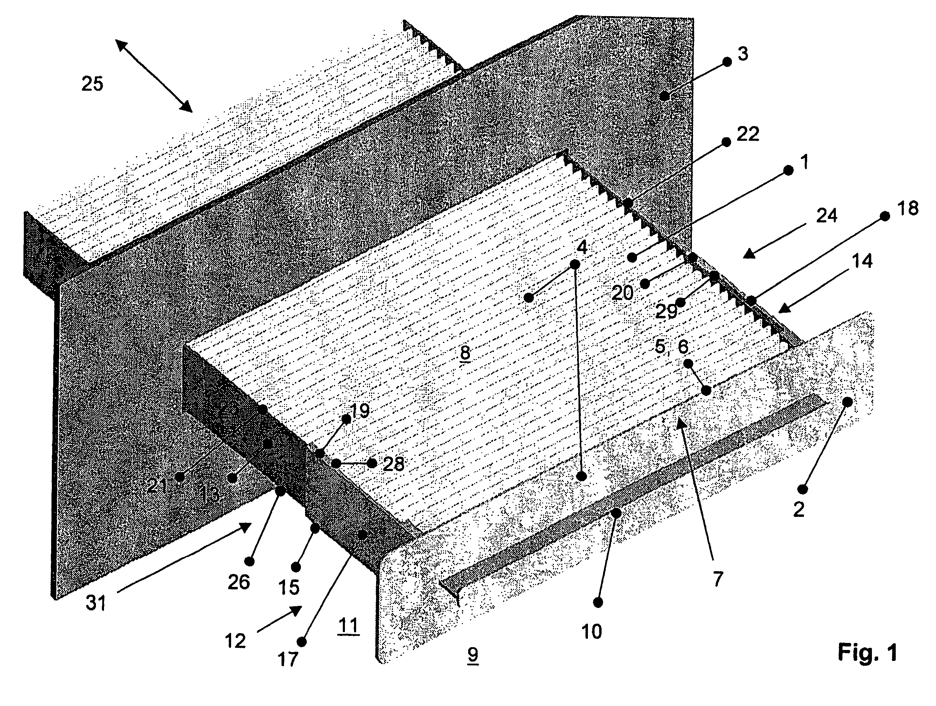

In Fig. 1 ist ein Ausführungsbeispiel der erfindungsgemäßen Filteranordnung gezeigt. Ein Faltenfilter 1, der aus einem plissierten Vliesstoff besteht und im Bereich seiner Längsseiten 13, 14 jeweils eine aufgeleimte oder aufgeschweißte Kante 23, 24 aufweist, bildet zusammen mit einem Deckel 2, der in diesem Ausführungsbeispiel aus einem polymeren Werkstoff besteht, die vormontierbare Einheit 4. Die vormontierte Einheit 4 ist während ihrer bestimmungsgemäßen Verwendung derart in das Filtergehäuse 3 eingeschoben, dass der Faltenfilter 1 vollständig vom Filtergehäuse 3 umschlossen ist und der Deckel 2 das Filtergehäuse 3 stirnseitig anliegend und dichtend berührt. Der Faltenfilter 1 und der Deckel 2 berühren einander unmittelbar dichtend im Bereich der anströmseitig letzten stirnseitigen Falte 6 des Faltenfilters 1 und des Schwerts 5 des Deckels 2. Da es sich bei dem Faltenfilter um ein Verschleißteil handelt, das bedarfsweise separat und einfach auswechselbar sein soll, ist der Faltenfilter 1 zerstörungsfrei lösbar mit dem Deckel 2 verbunden.

In dem hier gezeigten Ausführungsbeispiel ist der Faltenfilter 1 formschlüssig mit dem Deckel verbunden, wobei der Formschluss durch das anströmseitig 8 in die letzte stirnseitige Falte 6 eingreifende Schwert 5 und die Rastnocken 19, 20 gebildet ist. Die Rastnocken 19, 20 halten den Faltenfilter 1 auf den Längsschienen 15, 16 des Widerlagers 12 nieder. Das Schwert 5 bewirkt eine unverlierbare Zuordnung des Faltenfilters 1 am Deckel 2 in Längsrichtung 25 des Faltenfilters 1, während das Widerlager 12 den Faltenfilter 1, räumlich gesehen, in den beiden anderen Richtungen, bezogen auf den Deckel 2 fixiert.

Zur Demontage des Faltenfilters 1 vom Deckel 2 werden die Rastnocken 19, 20 der Halteklammern 17, 18 quer zur Längsrichtung 25 elastisch nach außen verformt, solange, bis sie die anströmseitigen Begrenzungen 21, 22 der Längsseiten 13, 14 des Faltenfilters 1 freigeben. Anschließend kann der Faltenfilter 1 an den Rastnocken 19, 20 vorbei, beginnend von dem dem Deckel 2 abgewandten Ende in Richtung des Betrachters geschwenkt werden, bis das Schwert 5 und die stirnseitig letzte Falte 6 des Faltenfilters 1 außer Eingriff gelangen und der Faltenfilter 1 sowie der Deckel 2 dadurch zerstörungsfrei voneinander lösbar sind.

Die Montage des Faltenfilters 1 mit dem Deckel 2 zur vormontierbaren Einheit 4 erfolgt derart, dass der Faltenfilter 1 mit seiner letzten stirnseitigen Falte 6 auf der Anströmseite 8 unter das Schwert 5 des Deckels 2 eingefädelt wird. Währenddessen schließen der Faltenfilter 1 und der Deckel 2, je nach deren Ausgestaltung, etwa einen Winkel von 30 bis 75° miteinander ein. Anschließend wird der Faltenfilter 1 solange in Richtung des Widerlagers 12 geschwenkt, bis die abströmseitigen Begrenzungen 26, 27 der Längsseiten 13, 14 die Längsschienen 15, 16 anliegend berühren. Sobald die abströmseitigen Begrenzungen 26, 27 der Längsseiten 13, 14 die Längsschienen 15, 16 berühren, schnappen die Rastnocken 19, 20, die einen Bestandteil der als Widerlager 12 ausgebildeten Halteklammern 17, 18 bilden, über den anströmseitigen Begrenzungen 21, 22 der Längsseiten 13, 14 ein. Die vormontierbare Einheit 4 ist nun fertiggestellt, um im Filtergehäuse 3 montiert zu werden.

Auf der dem Faltenfilter 1 abgewandten Seite 9 des Deckels 2 ist der Griff 10 angeordnet, der einen einstückigen und materialeinheitlichen Bestandteil des Deckels 2 bildet. Dieser Griff 10 erleichtert die Montage oder Demontage der vormontierbaren Einheit 4 mit dem Filtergehäuse 3.

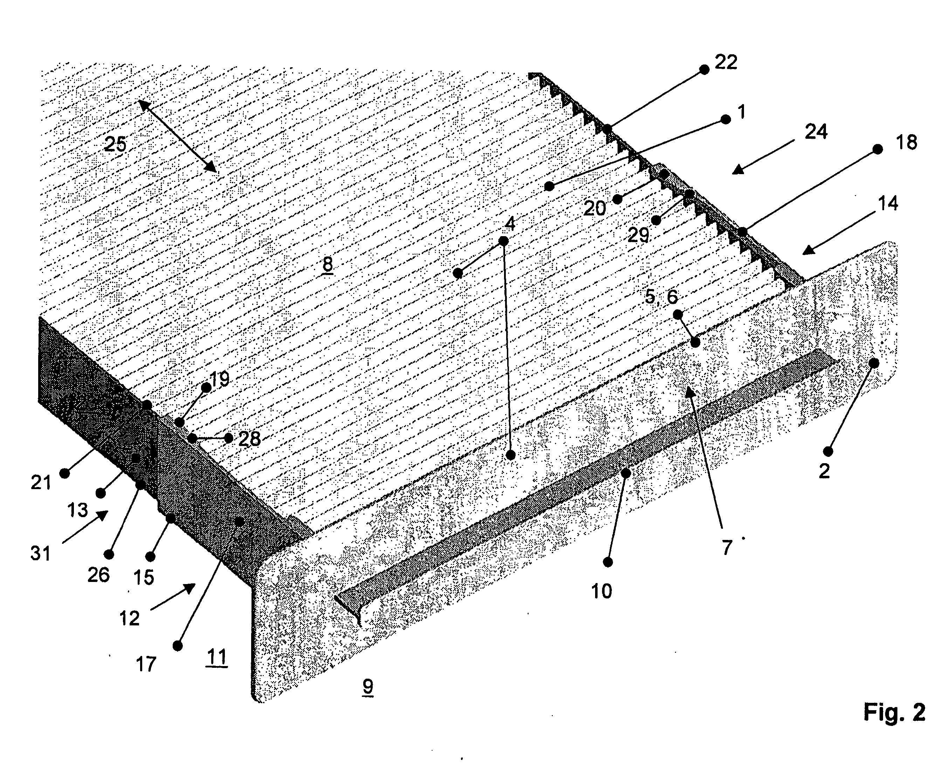

In Figur 2 ist ein Ausschnitt aus der vormontierten Einheit 4 aus Fig. 1 in vergrößerter Darstellung gezeigt. Die Rastnocken 19, 20 haben auf der dem Deckel 2 zugewandten Seite jeweils eine Auflaufschräge 28, 29, die bewirkt, dass der Faltenfilter 1 bei seiner Montage mit dem Deckel 2 zur vormontierten Einheit 4 die Halteklammern 17, 18 selbsttätig quer zur Längsrichtung 25 elastisch aufweitet. Die Montage des Faltenfilters 1 mit dem Deckel 2 ist dadurch wesentlich vereinfacht.

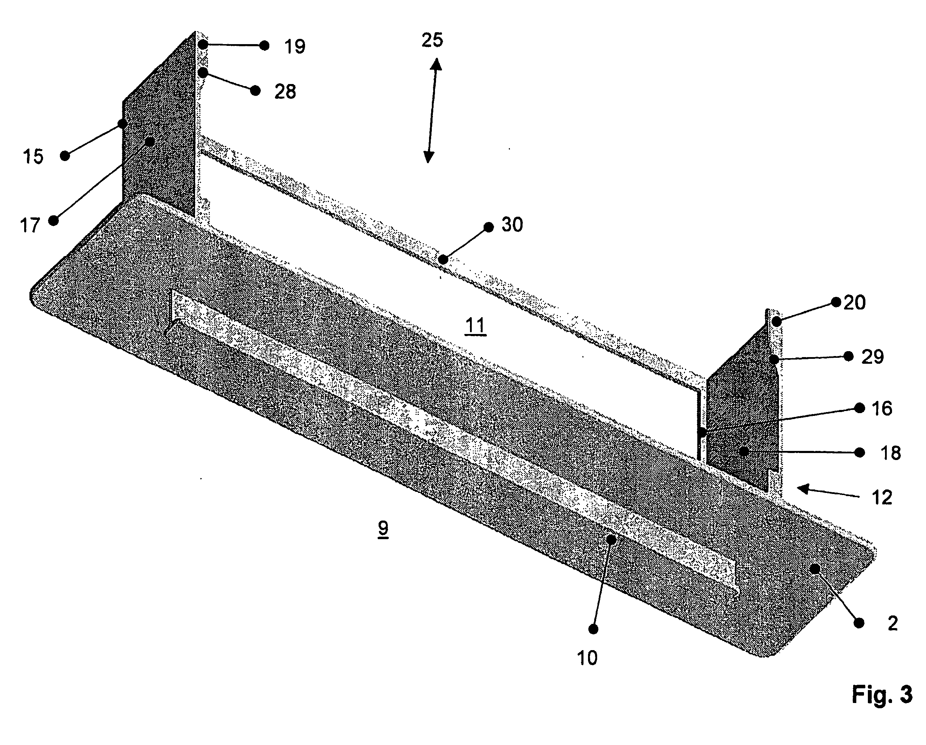

In Fig. 3 ist der Deckel 2 als Einzelteil in einer perspektivischen Darstellung von schräg oben gezeigt. Die beiden Halteklammem 17, 18 sind auf der den Rastnocken 19, 20 abgewandten Seite durch einen Verbindungssteg 30 verbunden, der zusätzlich für eine Formbeständigkeit der einstückig ineinander übergehend und materialeinheitlich mit dem Deckel 2 ausgebildeten Halteklammern 17, 18 sorgt, und dadurch für eine ausreichende Vorspannung der Halteklammern 17, 18 an den Längsseiten 13, 14 des Faltenfilters 1.

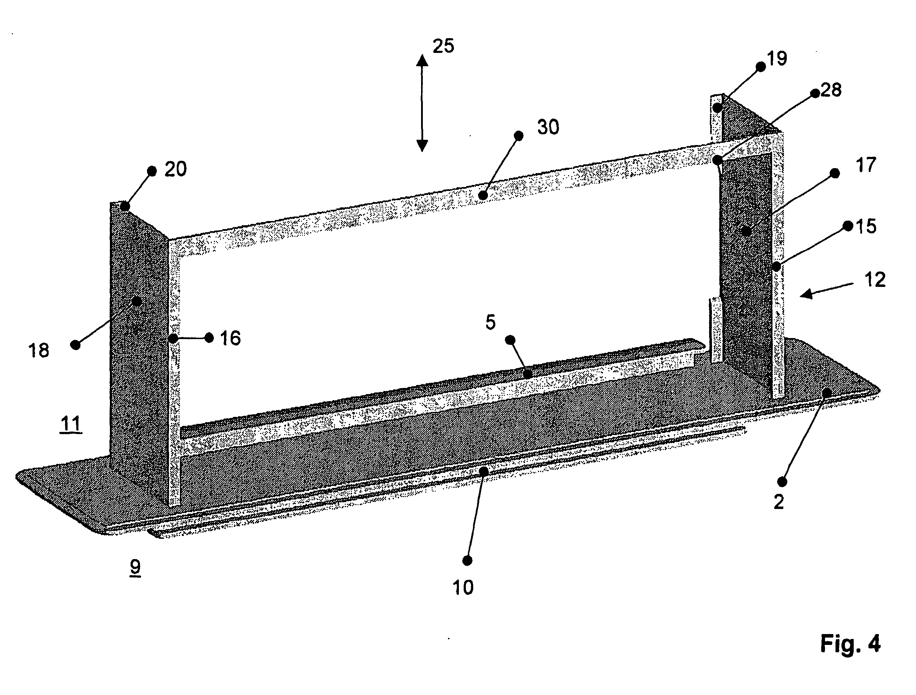

In Fig. 4 ist der Deckel 2 von schräg unten gezeigt. Auf der dem Griff 10 abgewandten Seite des Deckels 2 ist das im Wesentlichen L-förmige Schwert 5 angeordnet, das auf der Anströmseite 8 des Faltenfilters 1 in die letzte stirnseitige Falte 6 des Faltenfilters 1 dichtend eingreift. Während der bestimmungsgemäßen Verwendung der Filteranordnung legt sich die anströmseitige letzte Kante der letzten stirnseitigen Falte 6 dichtend an das Schwert 5 an und verhindert dadurch eine Leckage. Außerdem bildet das Schwert 5 eine Verliersicherung und verhindert, dass der Faltenfilter 1 in Längsrichtung 25 aus den Halteklammern 17, 18 des Deckels 2 rutscht.

### Bezugszeichenliste zu 00PA0160

- 1: Faltenfilter
- 2: Deckel
- 3: Filtergehäuse
- 4: Vormontierbare Einheit, bestehend aus 1 und 2
- 5: Schwert
- 6: Letzte Falte (anströmseitig)
- 7: Stirnseite von 1
- 8: Anströmseite von 1
- 9: Seite des Griffs an 2
- 10: Griff
- 11: Seite des Faltenfilters an 2
- 12: Widerlager
- 13: Längsseite von 1, links
- 14: Längsseite von 1, rechts
- 15: Längsschiene, links
- 16: Längsschiene, rechts
- 17: Halteklammer, links
- 18: Halteklammer, rechts
- 19: Rastnocken, links
- 20: Rastnocken, rechts
- 21: Anströmsseitige Begrenzung von 13
- 22: Anströmsseitige Begrenzung von 14
- 23: Kante an 1, links
- 24: Kante an 1, rechts
- 25: Längsrichtung von 1
- 26: Abströmseitige Begrenzung von 13
- 27: Abströmseitige Begrenzung von 14
- 28: Auflaufschräge von 19
- 29: Auflaufschräge von 20
- 30: Verbindungssteg
- 31: Abströmseite von 1

## Patentansprüche

1. Filteranordnung, umfassend einen Faltenfilter (1) und einen Deckel (2) eines Filtergehäuses (3), wobei der Faltenfilter (1) und der Deckel (2) eine vormontierbare Einheit (4) bilden und zerstörungsfrei lösbar sowie im Wesentlichen dichtend miteinander verbunden sind, wobei die Falten des Falten filters im wesentlichen parallel zum Dockelausgerichtet sind, **dadurch gekennzeichnet daß** der Deckel (2) ein Schwert (5) aufweist, das in der dem Deckel (2) zugewandten, letzten Falte (6) der Stirnseite (7) des Faltenfilters (1) im Wesentlichen dichtend angeordnet ist.

2. Filteranordnung nach Anspruch 1, **dadurch gekennzeichnet, dass** der Faltenfilter (1) und der Deckel (2) kraft- und/oder formschlüssig miteinander verbunden sind.

3. Filteranordnung nach einem der Ansprüche 1 oder 2, **dadurch gekennzeichnet, dass** der Deckel (2) aus einem polymeren Werkstoff besteht.

4. Filteranordnung nach einem der Ansprüche 1 bis 3, **dadurch gekennzeichnet, dass** das Schwert (5) auf der Anströmseite (8) des Faltenfilters (1) in der letzten stimseitigen Falte (6) angeordnet ist.

5. Filteranordnung nach einem der Ansprüche 1 bis 4, **dadurch gekennzeichnet, dass** der Deckel (2) und das Schwert (5) einstückig und materialeinheitlich ausgebildet sind.

6. Filteranordnung nach einem der Ansprüche 1 bis 5, **dadurch gekennzeichnet, dass** das Schwert (5) im Wesentlichen L-förmig ausgebildet ist.

7. Filteranordnung nach einem der Ansprüche 1 bis 6, **dadurch gekennzeichnet, dass** der Deckel (2) auf der dem Faltenfilter (1) abgewandten Seite (9) einen Griff (10) zur Montage oder Demontage der vormontierbaren Einheit (4) aufweist.

8. Filteranordnung nach einem der Ansprüche 1 bis 7, **dadurch gekennzeichnet, dass** der Deckel (2) und der Griff (10) einstückig und materialeinheitlich ausgebildet sind.

9. Filteranordnung nach einem der Ansprüche 1 bis 8, **dadurch gekennzeichnet, dass** der Deckel (2) auf der dem Faltenfilter (1) zugewandten Seite (11) ein Widerlager (12) zur Lagerung des Faltenfilters (1) am Deckel (2) aufweist.

10. Filteranordnung nach einem der Ansprüche 1 bis 9, **dadurch gekennzeichnet, dass** der Deckel (2) und das Widerlager (12) einstückig und materialeinheitlich ausgebildet sind.

11. Filteranordnung nach einem der Ansprüche 9 oder 10, **dadurch gekennzeichnet, dass** das Widerlager (12) durch zwei die Längsseiten (13, 14) des Faltenfilters (1) abströmseitig zumindest teilweise untergreifende Längsschienen (15, 16) gebildet ist.

12. Filteranordnung nach einem der Ansprüche 9 bis 11, **dadurch gekennzeichnet, dass** das Widerlager (12) durch zwei die Längsseiten (13, 14) des Faltenfilters (1) zumindest teilweise U-förmig umgreifende Halteklammern (17, 18) gebildet ist.

13. Filteranordnung nach einem der Ansprüche 11 oder 12, **dadurch gekennzeichnet, dass** die Längsschienen (15, 16) einen Bestandteil der Halteklammern (17, 18) bilden.

14. Filteranordnung nach einem der Ansprüche 9 bis 13, **dadurch gekennzeichnet, dass** das Widerlager (12) auf zumindest einer Längsseite (13, 14) des Faltenfilters (1) zumindest einen elastisch nachgiebigen Rastnocken (19, 20) aufweist, der die anströmseitige Begrenzung (21, 22) der entsprechenden Längsseite (13, 14) zumindest teilweise überdeckt.

15. Filteranordnung nach einem der Ansprüche 1 bis 14, **dadurch gekennzeichnet, dass** jede Längsseite (13, 14) des Faltenfilters (1) anströmseitig von jeweils zumindest einem elastisch nachgiebigen Rastnocken (19, 20) zumindest teilweise überdeckt ist.

16. Filteranordnung nach einem der Ansprüche 1 bis 15, **dadurch gekennzeichnet, dass** der Faltenfilter (1) mittels der Rastnocken (19, 20) in das Widerlager (12) einschnappbar ist.

## Claims

1. A filter assembly, comprising a folded filter (1) and a cover (2) of a filter housing (3), the folded filter (1) and the cover (2) forming a unit (4) which can be pre-assembled and being connected to each other in such a way that they can be detached without being destroyed and essentially with a sealing effect, the folds of the folded filter being aligned essentially parallel to the cover, **characterized in that** the cover (2) has a tongue (5), which is arranged in the last fold (6), facing towards the cover (2), of the front face (7) of the folded filter (1), essentially with a sealing effect.

2. A filter assembly according to claim 1, **characterized in that** the folded filter (1) and the cover (2) are connected to each other in a non-positively and/or positively locking manner.

3. A filter assembly according to either one of claims 1 and 2, **characterized in that** the cover (2) consists of a polymeric material.

4. A filter assembly according to any one of claims 1 to 3, **characterized in that** the tongue (5) is arranged on the inflow side (8) of the folded filter (1) in the last fold (6) on the side which has the front face.

5. A filter assembly according to any one of claims 1 to 4, **characterized in that** the cover (2) and the tongue (5) are formed in one piece and of the same material.

6. A filter assembly according to any one of claims 1 to 5, **characterized in that** the tongue (5) is formed in an essentially L-shaped manner.

7. A filter assembly according to any one of claims 1 to 6, **characterized in that** the cover (2) has on the side (9) facing away from the folded filter (1) a grip (10) for assembling or disassembling the unit (4) which can be pre-assembled.

8. A filter assembly according to any one of claims 1 to 7, **characterized in that** the cover (2) and the grip (10) are formed in one piece and of the same material.

9. A filter assembly according to any one of claims 1 to 8, **characterized in that** the cover (2) has on the side (11) facing towards the folded filter (1) an abutment (12) for mounting the folded filter (1) on the cover (2).

10. A filter assembly according to any one of claims 1 to 9, **characterized in that** the cover (2) and the abutment (12) are formed in one piece and of the same material.

11. A filter assembly according to either one of claims 9 and 10, **characterized in that** the abutment (12) is formed by two longitudinal bars (15, 16) extending at least partially under the longitudinal sides (13, 14) of the folded filter (1) on the outflow side.

12. A filter assembly according to any one of claims 9 to 11, **characterized in that** the abutment (12) is formed by two holding clips (17, 18) extending at least partially in a U-shaped manner around the longitudinal sides (13, 14) of the folded filter (1).

13. A filter assembly according to either one of claims 11 and 12, **characterized in that** the longitudinal bars (15, 16) form a component part of the holding clips (17, 18).

14. A filter assembly according to any one of claims 9 to 13, **characterized in that** the abutment (12) has on at least one longitudinal side (13, 14) of the folded filter (1) at least one flexibly compliant latching lug (19, 20), which at least partially covers over the limitation (21, 22) on the inflow side of the corresponding longitudinal side (13, 14).

15. A filter assembly according to any one of claims 1 to 14, **characterized in that** each longitudinal side (13, 14) of the folded filter (1) is at least partially covered over on the inflow side by in each case at least one flexibly compliant latching lug (19, 20).

16. A filter assembly according to any one of claims 1 to 15, **characterized in that** the folded filter (1) can be snap-fitted into the abutment (12) by means of the latching lugs (19, 20).

## Revendications

1. Ensemble filtrant, comprenant un filtre à plis (1) et un couvercle (2) d'un boîtier de filtre (3), le filtre à plis (1) et le couvercle (2) formant une unité (4) qui peut faire l'objet d'un montage préalable et étant reliés l'un à l'autre d'une manière permettant de les détacher sans destruction et essentiellement étanche, les plis du filtre à plis étant orientés de manière essentiellement parallèle au couvercle, **caractérisé en ce que** le couvercle (2) est pourvu d'un profilé (5) qui est disposé de manière essentiellement étanche dans le dernier pli (6) du côté frontal (7) du filtre à plis (1) situé sur le côté du couvercle (2).

2. Ensemble filtrant selon la revendication 1, **caractérisé en ce que** le filtre à plis (1) et le couvercle (2) sont reliés l'un à l'autre par friction et/ou par conjugaison de forme.

3. Ensemble filtrant selon l'une des revendications 1 ou 2, **caractérisé en ce que** le couvercle (2) est formé d'un matériau polymère.

4. Ensemble filtrant selon l'une des revendications 1 à 3, **caractérisé en ce que** le profilé (5) est situé sur le côté d'affluence (8) du filtre à plis (1) dans le dernier pli (6) situé sur le côté frontal.

5. Ensemble filtrant selon l'une des revendications 1 à 4, **caractérisé en ce que** le couvercle (2) et le profilé (5) sont exécutés de manière solidaire et dans le même matériau.

6. Ensemble filtrant selon l'une des revendications 1 à 5, **caractérisé en ce que** le profilé (5) est exécuté de manière à avoir essentiellement la forme d'un L.

7. Ensemble filtrant selon l'une des revendications 1 à 6, **caractérisé en ce que** le couvercle (2) est pourvu, sur le côté (9) éloigné du filtre à plis (1 ), d'une poignée (10) en vue du montage ou du démontage de l'unité (4) pouvant faire l'objet d'un montage préalable.

8. Ensemble filtrant selon l'une des revendications 1 à 7, **caractérisé en ce que** le couvercle (2) et la poignée (10) sont exécutés de manière solidaire et dans le même matériau.

9. Ensemble filtrant selon l'une des revendications 1 à 8, **caractérisé en ce que** le couvercle (2) est pourvu, sur le côté (11) tourné vers le filtre à plis (1), d'une butée (12) permettant de placer le filtre à plis (1) sur le couvercle (2).

10. Ensemble filtrant selon l'une des revendications 1 à 9, **caractérisé en ce que** le couvercle (2) et la butée (12) sont exécutés de manière solidaire et dans le même matériau.

11. Ensemble filtrant selon l'une des revendications 9 ou 10, **caractérisé en ce que** la butée (12) est formée par deux rails longitudinaux (15, 16) qui passent, au moins partiellement, sous les côtés longitudinaux (13, 14) du filtre à plis (1) sur le côté d'écoulement.

12. Ensemble filtrant selon l'une des revendications 9 à 11, **caractérisé en ce que** la butée (12) est formée par deux brides de retenue (17, 18) formant un U qui entoure, au moins partiellement, les côtés longitudinaux (13, 14) du filtre à plis (1).

13. Ensemble filtrant selon l'une des revendications 11 ou 12, **caractérisé en ce que** les rails longitudinaux (15, 16) forment une partie des brides de retenue (17, 18).

14. Ensemble filtrant selon l'une des revendications 9 à 13, **caractérisé en ce que** la butée (12) est pourvue, sur au moins un côté longitudinal (13, 14) du filtre à plis (1), d'au moins une came (19, 20) élastique et flexible qui couvre, au moins partiellement, la limitation (21, 22) du côté longitudinal correspondant (13, 14) sur le côté d'affluence.

15. Ensemble filtrant selon l'une des revendications 1 à 14, **caractérisé en ce que** chaque côté longitudinal (13, 14) du filtre à plis (1) est couvert au moins partiellement, sur le côté d'affluence, par au moins une came (19, 20) élastique et flexible à chaque fois.

16. Ensemble filtrant selon l'une des revendications 1 à 15, **caractérisé en ce que** le filtre à plis (1) peut être emboîté dans la butée (12) au moyen des cames (19, 20).
